# EUROPEAN PATENT APPLICATION

(11) **EP 3 648 248 A1**
(43) Date of publication of application: **06.05.2020**
(21) Application number: 18382784.9
(22) Date of filing: 02.11.2018
(51) Int. Cl.: H01Q 1/42, H01Q 1/32

(54) **RADOME FOR VEHICLES**

(71) Applicant: Zanini Auto Grup, S.A., 08150 Parets del Vallés - Barcelona (ES)
(72) Inventor: MAYER PUJADAS, Augusto, 08150 Parets Del Valles (Barcelona) (ES)
(74) Representative: Herrero & Asociados, S.L.

(57) **Abstract**

Radome (1) for vehicles, comprising a frontal surface (11), a rear surface (12) and a heating element (3), said heating element (3) being powered by a power source (4), wherein the radome also comprises a temperature sensor (5) in communication with said power source (4).

This allows to optimally implement the heating function, avoiding waste of unnecessary power and decreasing the risk of damaging the radome, thus increasing its performance and durability.

## Description

The present invention refers to a radome for vehicles, which is able to give information back to a heating power source about the temperature in the radome surface.

### Background of the invention

Vehicles with sensors able to sense their surroundings are the key enablers to decrease of road fatalities. Through sensors, driver assistance functions are implemented, minimizing risks and increasing the probability of avoiding collisions.

Vehicles are designed to offer an aesthetically pleasant impression. Therefore, sensors must be integrated within the vehicle behind covers enabling their function, concealing them from the public view and harmonized with the aesthetic design of the vehicle.

In case of a radar sensor, such covers are known as radomes. As mentioned above, radomes must minimize the impact its presence offers to radar emitted and received waves. This is especially important in adverse weather conditions, when driving becomes more dangerous due to loss of visibility, road ground conditions and other. Obviously, water, ice and snow represent a clear danger for the functionality of the radar, as they block radar waves and can be deposited over the radome surface.

Hence, radomes must be able to remove such layers, for instance, melting them. Integrating a heater in a decorative radome is a difficult task given the complexity of the design, the different materials employed, and the decoration technologies required to faithfully reproduce a brand logo.

The most widespread method to integrate a heater in an automotive radome is by inserting metallic wires in the radome body. Electric current flows through the wires from a heating power source, heating the wire and the material surrounding them until the water, ice or snow are melted and removed from the radome surface.

Automobile manufacturers typically specify a certain temperature that must be achieved across the radome surface in a specific time span. Also, available electric voltage and current to circulate through the heater is limited and specified by the automobile manufacturer

Given the high temperatures achieved by the wires when current is circulating, damages in the surrounding material are prone to happen due to expansion and contraction caused by temperatures shifts and the different properties of the materials in contact, such as metallic conductors, resins, inks and other coatings. Thus, the radome aesthetical appearance and radiofrequency performance may suffer degradation due to the presence of the heater.

It is therefore of paramount importance managing efficiently the heating of the radome to expand its lifespan. The heater is sandwiched between radome layers with different material properties, so retrieving the temperature at the radome surface is not straightforward just from monitoring the amount of voltage and current supplied to the heater from the heating power source.

Therefore, one purpose of the present invention is to provide a radome which is able to optimize the thermal management.

### Description of the invention

With the radome for vehicles according to the present invention it is possible to solve said drawbacks, providing other advantages that are described below.

The radome for vehicles according to the present invention comprisies a frontal surface, a rear surface and a heating element, said heating element being powered by a power source, wherein the radome also comprises a temperature sensor in communication with said power source.

Advantageously, said temperature sensor is integrated in the radome between the frontal surface and the rear surface.

Furthermore, the temperature sensor preferably detects the temperature of the frontal surface of the radome.

The heating element is also integrated in the radome between the frontal surface and the rear surface, and the temperature sensor is in communication with the power source for providing information about the detected temperature and regulating the power provided by the power source to the heating element.

The information about the detected temperature is used by the heating power source, provided with a controller, to regulate the heating power supplied to the heating element in the radome.

This allows to optimally implement the heating function, avoiding waste of unnecessary power and decreasing the risk of damaging the radome, thus increasing its performance and durability.

### Brief description of the drawings

For a better understanding the above explanation and for the sole purpose of providing an example, some non-limiting drawings are included that schematically depict a practical embodiment.

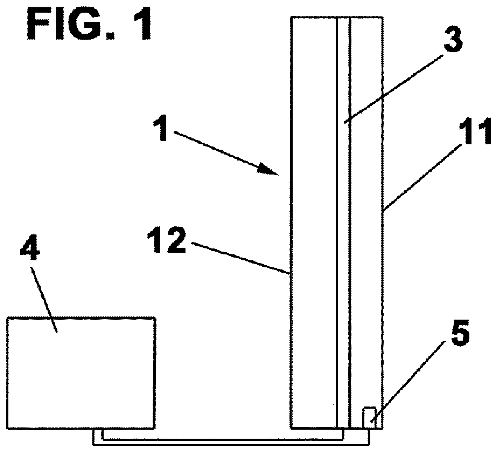

Figure 1 is a diagrammatical sectional view of the radome for vehicles according to the present invention.

### Description of a preferred embodiment

The radome for vehicles according to the present invention is denoted as a whole by numeral reference 1, and the radome 1 comprises or defines a frontal surface 11 and a rear surface 12.

It must be understood that the frontal surface 11 is the surface oriented outwardly with respect to the vehicle, i.e. the surface exposed to the external environment, and the rear surface 12 is the opposed surface, as shown in Fig. 1.

The radome 1 can be of any suitable composition, such as e.g. formed from layers of the same composition of the radome disclosed in WO2012066417 A1, in the name of the applicant of the present application, or the like.

The radome 1 for vehicles according to the present invention also comprises a heating element 3 that heats the radome 1 for removing (by melting) water, ice or snow placed on the frontal surface 11 of the radome 1.

The heating element 3, such as e.g. a resistor, is powered by a power source 4, such as a battery, of the same vehicle or another, and provides power to the heating element 3 for heating the radome 1 at a suitable temperature.

The heating element 3 is preferably integrated in the radome 1 between the frontal surface 11 and the rear surface 12, as shown in Fig. 1.

This suitable temperature is detected by a temperature sensor 5, which can be any suitable temperature sensor, such as a thermometer, that is in communication with the power source 4, which includes a controller.

The temperature sensor 5 is also preferably integrated in the radome 1, between the frontal surface 11 and the rear surface 12, as shown in Fig, 1.

The temperature sensor 5 is preferably placed near the frontal surface 11, because the detected temperature is preferably the temperature of the frontal surface 11, where water, ice or snow could be present.

Therefore, the power source 4 reduces or increases the power provided to the heating element 3 according to the detected temperature, or even switches on or switches off the heating element 3, i.e. the temperature sensor 5 works as a thermostat.

Even though reference has been made to a specific embodiment of the invention, it is obvious for a person skilled in the art that the radome for vehicles described herein is susceptible to numerous variations and modifications, and that all of the details mentioned can be substituted for other technically equivalent ones without departing from the scope of protection defined by the attached claims.

## Claims

1. Radome (1) for vehicles, comprising a frontal surface (11), a rear surface (12) and a heating element (3), said heating element (3) being powered by a power source (4), **characterized in that** the radome also comprises a temperature sensor (5) in communication with said power source (4).

2. Radome (1) for vehicles according to claim 1, wherein said temperature sensor (5) is integrated in the radome (1) between the frontal surface (11) and the rear surface (12).

3. Radome (1) for vehicles according to claim 1 or 2, wherein the temperature sensor (5) detects the temperature of the frontal surface (11) of the radome (1).

4. Radome (1) for vehicles according to claim 1, wherein the heating element (3) is integrated in the radome (1) between the frontal surface (11) and the rear surface (12).

5. Radome (1) for vehicles according to claim 1, wherein the temperature sensor (5) is in communication with the power source (4) for providing information about the detected temperature and regulating the power provided by the power source (4) to the heating element (3).
